# EUROPEAN PATENT APPLICATION

(11) **EP 2 672 237 A1**
(43) Date of publication of application: **11.12.2013**
(21) Application number: 12742393.7
(22) Date of filing: 30.01.2012
(51) Int. Cl.: G01F 3/22, F23K 5/00, F23N 5/18, F23N 5/24

(54) **FLOW MEASUREMENT DEVICE**

(30) Priority: 04.02.2011 JP 2011023285
(71) Applicant: Panasonic Corporation, Osaka 571-8501 (JP)
(72) Inventor: YOKOHATA, Mitsuo, Chuo-ku Osaka 540-6207 (JP); NAWA, Motoyuki, Chuo-ku Osaka 540-6207 (JP); TATSUI, Hiroshi, Chuo-ku Osaka 540-6207 (JP); KARAMURA, Akinari, Chuo-ku Osaka 540-6207 (JP)
(74) Representative: Schwabe - Sandmair - Marx
(86) International application number: PCT/JP2012/000572
(87) International publication number: WO 2012/105217

(57) **Abstract**

A gas instrument determiner section (12) included in a flow meter device (10A) determines a kind of a gas instrument (20) in use by utilizing a flow pattern in which a range of increase/decrease in a gas flow is within a flow zone set in a fuel cell (21) as a flow pattern which is a pattern of a gas flow which changes over time when the fuel cell (21) is included in the gas instrument (20) in use. This makes it possible to accurately determine whether or not the gas instrument in use is the fuel cell while effectively suppressing unnecessary gas consumption.

## Description

### Technical Field

The present invention relates to a flow meter device which is capable of determining a gas instrument in use. Particularly, the present invention relates to a flow meter device which is capable of determining whether or not the gas instrument in use is a fuel cell.

### Background Art

As a flow meter device for measuring a flow (flow rate) of a gas, there is conventionally known a flow meter device which has a function of determining a kind of a gas instrument which uses a gas. For example, Patent Literature 1 discloses a gas instrument determination device which contains a table of partial flow patterns obtained by dividing a series of gas flow patterns generated by combustion control, for each combustion control step, regarding plural kinds of gas instruments, and extracts a partial flow pattern matching a detected gas flow pattern to determine a gas instrument, and a gas meter including this gas instrument determination device.

If a duration of the detected gas flow is too long, an abnormal utilization state such as forgetfulness about turning off the gas instrument, may take place. To avoid this, a safe continued use time is set for each kind of the gas instruments. If a gas instrument (e.g., gas stove) which is used for a relatively long time and a gas instrument (e.g., range, small boiler, etc.) which is used for a relatively short time coexist, and therefore the kind of the gas instrument cannot be determined, the safe continued use time is set to be adapted to the gas instrument which is used for a longer time. To address this situation, Patent Literature 1 determines the gas instrument using the partial flow pattern obtained by dividing the gas flow pattern.

Patent Literature 2 discloses a technique in which an operation for determining an instrument is performed while lessening an influence on a normal operation of a gas instrument to a minimum level. Specifically, a signal generating section included in the gas instrument generates a signal unique to the gas instrument, and an instantaneous signal detecting section included in a gas meter detects this signal, to identify the gas instrument. As the signal unique to the gas instrument, a flow of a gas of a predetermined flow and for a predetermined time is exemplarily described. After the flow of this signal, the gas is flowed with a normal flow of the gas instrument. Furthermore, a change pattern of a combination of a flow and a duration can be made as the signal unique to the gas instrument.

Fuel cells have been put into practical use in large-scaled or medium-scaled power generation equipment. In recent years, development of a fuel cell for household use progresses, and such a fuel cell has been available commercially. Hydrogen is required in power generation in the fuel cell. In the fuel cell for household use, a hydrocarbon-based gas (city gas or liquefied petroleum gas (LP gas), etc.) supplied to customer home is used as a hydrogen supply source. Therefore, the fuel cell for household use may be regarded as "gas instrument" because it uses the gas.

A general gas instrument is used for a certain time. On the other hand, the fuel cell is used for power generation for a continued time, and therefore its continued use time is much longer than the above stated safe continued use time set in the general gas instrument. Because of this, if the conventional general gas meter measures a gas flow for a long time because of the use of the fuel cell, it misunderstands that there is a possibility of forgetfulness about turning off the gas instrument, and shuts-off the flow of the gas. Since the shut-off of the gas interrupts the power generation performed by the fuel cell, continued power generation will be impeded.

### Citation List

### Patent Literature

Patent Literature 1: Japanese-Laid Open Patent Application Publication No. 2003-149027
Patent Literature 2: Japanese-Laid Open Patent Application Publication No. 2006-200798

### Summary of the Invention

### Technical Problem

However, the function of determining the gas instrument disclosed in Patent Literature 1 or Patent Literature 2 is unable to detect a flow waveform of the fuel cell if a flow of another gas instrument changes at a start-up timing of the fuel cell, so that it cannot be detected that the fuel cell is in use. Since it cannot be detected that the fuel cell is in use, the gas is shut-off because of the function of determining abnormal use even though the fuel cell is in use.

The present invention has been made to solve the above described problem, and an object of the present invention is to provide a flow meter device which is capable of accurately determining whether or not a gas instrument in use is a fuel cell while effectively suppressing unnecessary gas consumption.

### Solution to Problem

According to the present invention, there is provided a flow meter device for measuring flows of a gas flowing into a plurality of gas instruments including a fuel cell, comprising: a fluid passage in which the gas flows; a flow measuring section for measuring a gas flow in the fluid passage; a flow pattern storage section for storing flow patterns which are patterns of the gas flow which change over time, for respective kinds of the plurality of gas instruments; and a gas instrument determiner section which compares an actual measurement flow pattern generated from the gas flow measured by the flow measuring section to the flow patterns stored in the flow pattern storage section, to determine a kind of the gas instrument in use; a flow zone which is a range of the gas flow according to the kind of each gas instrument is beforehand set to the gas instruments, wherein the flow pattern storage section contains a flow pattern of at least the fuel cell of the plurality of gas instruments, and the flow pattern of the fuel cell includes an artificial flow pattern different from an original flow pattern of the fuel cell.

In the flow meter device having the above configuration, the artificial flow pattern may be a flow change pattern which is an increase/decrease in the gas flow within a predetermined time; and the increase/decrease in the gas flow of the flow change pattern may be within a predetermined flow zone.

In the flow meter device having the above configuration, the flow change pattern may be set to be generated repetitively, and the actual measurement flow pattern including the flow change pattern may be generated intermittently; and wherein the gas instrument determiner section may compare the actual measurement flow pattern to the flow patterns stored in the flow pattern storage section.

In the flow meter device having the above configuration, the flow change pattern may be set to be generated periodically, and the actual measurement flow pattern including the flow change pattern is generated periodically; and the gas instrument determiner section may compare the actual measurement flow pattern to the flow patterns stored in the flow pattern storage section.

In the flow meter device having the above configuration, the flow measuring section may measure an instantaneous flow intermittently at constant measurement time intervals; the actual measurement flow pattern may include a flow difference value calculated from two continuous instantaneous flows measured by the flow measuring section; and the gas instrument determiner section may compare the actual measurement flow pattern including the flow difference value to the flow patterns stored in the flow pattern storage section.

In the flow meter device having the above configuration, the flow measuring section may measure an instantaneous flow intermittently at constant measurement time intervals; wherein the actual measurement flow pattern includes a flow difference value calculated from instantaneous flows measured by the flow measuring section at times which are apart by a time interval which is an integral multiple of the constant measurement time interval; and wherein the gas instrument determiner section may compare the actual measurement flow pattern including the flow difference value to the flow patterns stored in the flow pattern storage section.

The flow meter device having the above configuration may further comprise a gas shut-off section for shutting-off the gas flowing into the gas instrument when the gas flow measured by the flow measuring section continues to fall within a preset range of a shut-off reference flow for a time period longer than a predetermined time; wherein when the gas instrument determiner section determines that the gas instrument in use is the fuel cell, the gas shut-off section may not shut-off the gas flowing into the fuel cell even when the gas flow measured by the flow measuring section continues to fall within the preset range of the shut-off reference flow for the time period longer than the predetermined time.

The above and further objects and features of the invention will more fully be apparent from the following detailed description with accompanying drawings.

### Advantageous Effects of Invention

As described above, in accordance with the present invention, it is possible to achieve advantages that a flow meter device is capable of accurately determining whether or not a gas instrument in use is a fuel cell while effectively suppressing unnecessary gas consumption.

### Brief Description of Drawings

[Fig. 1] Fig. 1 is a block diagram showing an example of a configuration of a flow meter device according to Embodiment 1 of the present invention, and an example of its utilization state.
[Fig. 2] Fig. 2 is a schematic view showing an example of flow zones of gas instruments for use in the utilization state of the flow meter device of Fig. 1.
[Fig. 3] Fig. 3A is a time chart showing an example of a flow pattern in the flow meter device of Fig. 1, and Fig. 3B is a time chart showing an example of a flow pattern in a conventional flow meter device.
[Fig. 4] Fig. 4 is a schematic view showing instantaneous flows measured by the flow meter device of Fig. 1, and differences between the instantaneous flows.
[Fig. 5] Figs. 5A and 5B are block diagrams showing an example of a configuration of a flow meter device according to Embodiment 2 of the present invention.

### Description of Embodiments

Hereinafter, preferred embodiments of the present invention will be described reference to the drawings. Throughout the drawings, the same or corresponding components are identified by the same reference numerals and will not be descried in repetition.

### (Embodiment 1)

### [Configuration of flow meter device]

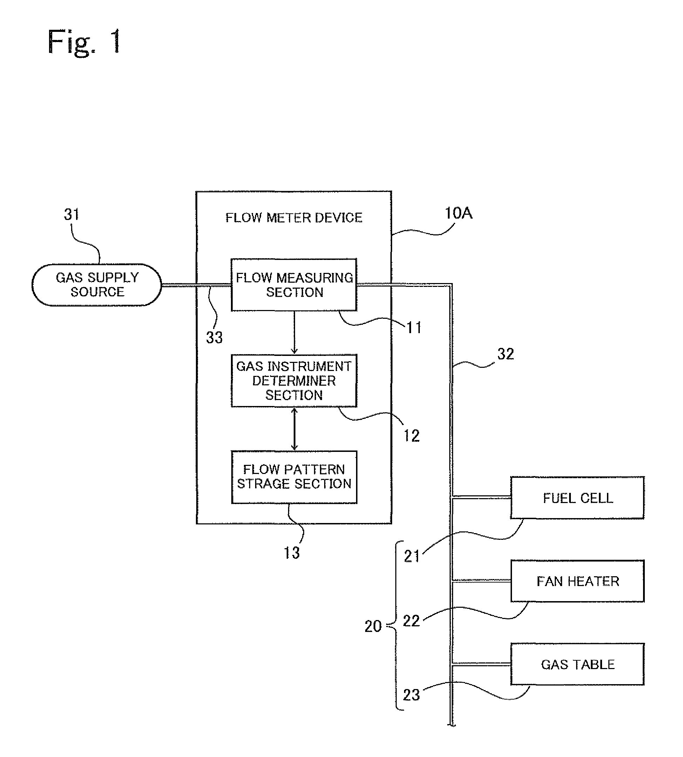

First of all, an example of a configuration of a flow meter device according to Embodiment 1 of the present invention, and an example of a utilization state of the flow meter device will be specifically described with reference to Fig. 1. As shown in Fig. 1, a flow meter device 10A of the present embodiment is connected to a gas supply source 31 and to a gas instrument 20 via a gas supply line 32.

The gas supply source 31 is connected to a raw material gas source (e.g., infrastructure of city gas or liquefied petroleum gas (LP gas), etc.), and supplies a hydrocarbon-based gas (e.g., natural gas containing methane as a major component, LP gas containing propane as a major component) to the gas supply line 32 and the gas instrument 20, according to a demand. As the gas supply line 32, a known gas pipe is used, but a known path other than the gas pipe may be used. Although not shown in Fig. 1, the gas supply line 32 is provided with on-off valves, branching mechanisms, etc..

As the gas instrument 20, for example, a fuel cell 21, a fan heater 22, and a gas table 23 are illustrated. A specific configuration of the fuel cell 21 is not particularly limited. In the present embodiment, for example, the configuration of the fuel cell 21 may be such that a fuel cell stack, a desulfurization device, a raw material supply device, an oxidizing gas supply device, a reformer, a heat supply device, lines connecting these components, valves provided on the lines, etc., which is a known configuration. As another gas instrument 20 (fan heater 22, gas table 23), a known gas instrument is used.

The fuel cell stack is a stack of a plurality of power generation cells. A specific kind of each power generation cell is not particularly limited, and there are a polymer electrolyte fuel cell, a solid oxide fuel cell, a phosphorous acid fuel cell, a molten carbonate fuel cell, etc., which are known fuel cells. Specific configurations of the desulfurization device, the raw material supply device, the oxidizing gas supply device, the reformer, the heat supply device, the lines and the valves are not particularly limited, and known components may be suitably used.

The flow meter device 10A is provided on the gas supply line 32 to measure flows (flow rates) of a gas flowing into the plurality of gas instruments 20 including the fuel cell 21. The flow meter device 10A includes a flow measuring section 11, a gas instrument determiner section 12, and a flow pattern storage section 13. The flow measuring section 11 measures a gas flow in a fluid passage 33 in which the gas flows. A specific configuration of the flow measuring section 11 is not particularly limited. In the present embodiment, as the flow measuring section 11, an ultrasonic flow meter unit for measuring a flow of a fluid such as a gas using an ultrasonic wave is used. As the flow measuring section 11, an electronic flow meter unit such as a flow sensor may be used, instead of the ultrasonic flow meter unit, but it is not particularly limited.

As a typical example of the ultrasonic flow meter unit, there is an ultrasonic flow meter unit which utilizes a propagation time difference method may be used. In the propagation time difference method, ultrasonic transmitters/receivers are provided at an upstream side and a downstream side of the fluid passage 33 for which a flow is to be measured, and an ultrasonic wave is transmitted and received alternately between them. Based on a difference between forward propagation time and reverse propagation time, a flow velocity of the fluid is measured, and the flow of the fluid is measured by utilizing the flow velocity and a cross-sectional area of the fluid passage 33. The fluid passage 33 is a portion of the flow meter device 10A, and is connected to the gas supply line 32, although this is schematically shown in Fig. 1.

The gas instrument determiner section 12 determines the kind of the gas instrument 20 in use, from among the gas instruments 20 connected to the gas supply line 32. In the present embodiment, specifically, the gas instrument determiner section 12 determines the gas instrument 20 based on a flow pattern of the gas. The gas instrument determiner section 12 may perform an operation for addressing leakage of the gas, as necessary, after it determines the kind of the gas instrument 20.

The gas flow pattern is, in the present embodiment, defined as a pattern of a change in the gas flow which occurs over time. The gas flow pattern is derived by stereotyping (patterning) a change chart of the gas flow measured as a continuous change by the flow measuring section 11, time-lapse plots of instantaneous gas flows (instantaneous flows) measured intermittently, etc., according to the type (or category) of the gas instrument 20. In a case where the flow meter device 10A is a gas meter including a microcomputer, the gas flow pattern is implemented based on programs, etc., incorporated into the microcomputer.

### [Determination of gas instrument]

The determination of the gas instrument, which is performed by the flow meter device 10A, will be described hereinafter. In the flow meter device 10A, the flow measuring section 11 measures the gas flow, and thereby the gas instrument determiner section 12 generates a flow pattern generated by actual measurement (hereinafter will be referred to as actual measurement flow pattern). The flow pattern storage section 13 contains flow patterns (hereinafter will be referred to as set patterns) set as corresponding to kinds of the gas instruments 20. The gas instrument determiner section 12 compares the generated actual measurement flow pattern to the set patterns stored in the flow pattern storage section 13 to determine the kind of the gas instrument 20 in use.

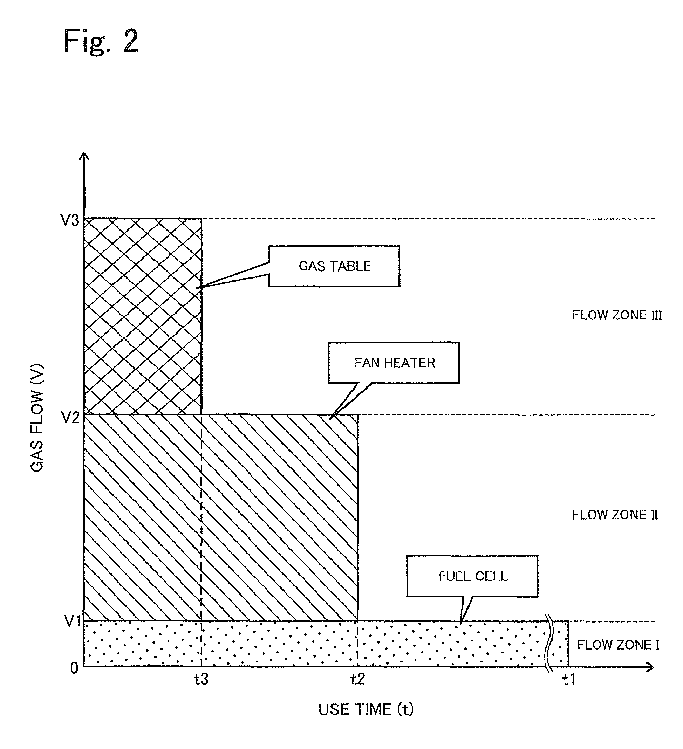

Abnormal use determination times corresponding to use flow zones (division zones) are set in the flow meter device 10A. If a gas utilization state which is equal to or longer than an abnormal use determination time in one use flow zone is detected, the flow meter device 10A shuts-off the fluid passage 33 for the purpose of safety. Fig. 2 sis a graph showing a relationship between standard use flow zones and abnormal use determination times corresponding to the use flow zones, respectively, regarding the fuel cell 21, the fan heater 22, and the gas table 23. A vertical axis indicates a maximum gas flow **V** set in the gas instrument 20, and a horizontal axis indicates an abnormal use determination time **t** (or safe continued use time). As shown in Fig. 2, typically, as the use flow zone is greater, the corresponding abnormal use determination time is set shorter.

Specifically, an abnormal use determination time **t3** corresponding to a flow zone III **(V2** < **V ≦V3**) in which the gas table 23 or the like is used is shorter than an abnormal use determination time **t2** corresponding to a flow zone II (**V1** < **V ≦V2**) in which the fan heater 22 or the like is used. Also, the abnormal use determination time **t2** corresponding to the flow zone II (**V1** < **V ≦V2**) is shorter than an abnormal use determination time **t1** corresponding to a flow zone I (**0** < **V ≦V1)** in which the fuel cell 21 or the like is used.

However, it is assumed that the fuel cell 21 is always activated for the power generation. Because of this, desirably, the flow meter device 10A does not shut-off the fluid passage 33 even when the gas utilization state which is equal to or longer than the abnormal use determination time is detected in the state in which the fuel cell 21 is in use.

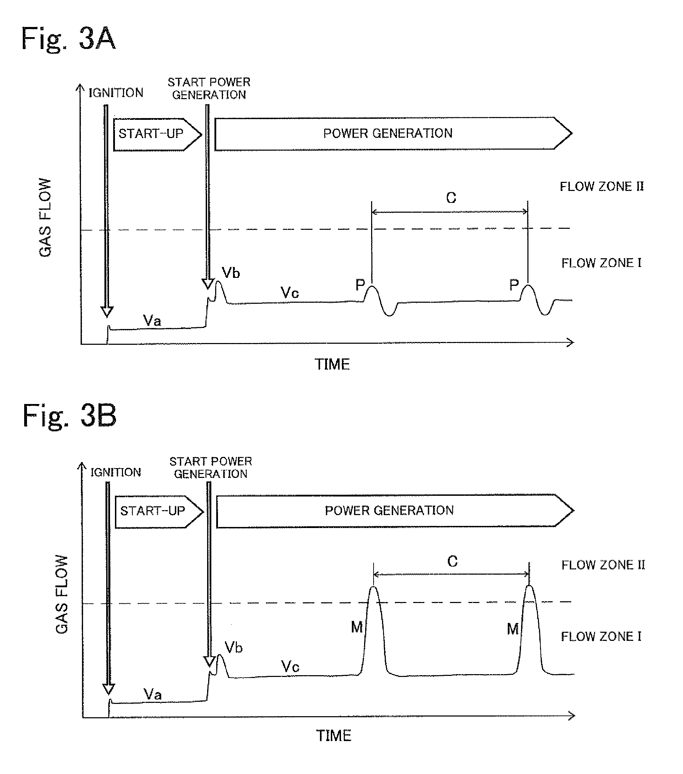

To this end, in the present embodiment, in addition to the above stated determination as to the gas instrument, the fuel cell 21 is configured to generate an artificial flow change pattern P different from its original flow pattern as shown in Fig. 3A. By detecting the flow pattern including this artificial flow change pattern P, the flow meter device 10A can accurately determine whether or not the fuel cell 21 is in use. That is, in the flow meter device 10A, the flow change pattern P is included in the set pattern of the fuel cell 21 stored in the flow pattern storage section 13, and the gas instrument determiner section 12 compares this set pattern to the actual measurement flow pattern to determine whether or not the fuel cell 21 is activated continuously.

If it is determined that the fuel cell 21 is in use, the flow meter device 10A does not shut-off the fluid passage even when a gas utilization state which is equal to or longer than the abnormal use determination time **t1** in the flow zone I is detected. Especially, since the artificial flow change pattern P different from the original flow pattern is generated, it is more accurately determined whether or not the fuel cell 21 is in use. As a result, it becomes possible to provide a flow meter device which is more convenient.

Specific flow change, pattern length or the like of the artificial flow change pattern P are not particularly limited, so long it can be distinguished from the flow change which may occur during a normal operation of the fuel cell 21. How to generate the artificial flow change pattern P in the fuel cell 21 is not particularly limited. For example, as shown in Fig. 3A, the fuel cell 21 may be caused to generate a change (or pulsation) of the gas flow of a small amount for a short time using a valve or the like provided in the fuel cell 21. The artificial flow change pattern P is a change of the gas flow which is much smaller than a peak M of the change shown in Fig. 3B. Because of this, unnecessary gas consumption can be avoided, and misdetermination of the gas instrument can be avoided appropriately.

Preferably, the artificial flow change pattern P is set to be repeated in the flow pattern of the fuel cell 21. In this case, the gas instrument determiner section 12 may intermittently generate the actual measurement flow pattern including the artificial flow change pattern P and compare the actual measurement flow pattern to the set patterns. Timings at which the artificial flow change pattern P is generated repetitively are not particularly limited, and may be generated periodically or randomly (irregularly). Regardless of whether the artificial flow change pattern P is generated periodically or randomly, the fuel cell 21 is preferably configured to generate the artificial flow change pattern P at least one or more times within a predetermined time interval C. The predetermined time interval C is desirably set to a time equal to the above mentioned abnormal use determination time.

If it is determined that the fuel cell 21 is in use, a safe function for preventing gas leakage may be disenabled for a specified time. The safe function for preventing gas leakage refers to a function in which it is determined that there is a possibility of gas leakage if continued use of the gas for a long time (e.g., 30 days) is detected, and as a result, the fluid passage 33 is shut-off.

### [Configuration of flow pattern]

The flow patterns used to determine the gas instrument 20 in the present embodiment may be, as described above, the patterns of the changes in the gas flows which occur over time. Specifically, the flow patterns may be change charts of the gas flows measured as continuous changes, or plots of instantaneous gas flows (instantaneous flows) measured intermittently, which occur over time. Typically, low electric power consumption is required in the flow meter device 10A like the gas meter for household use. Therefore, the gas flow is preferably measured intermittently like the latter case, rather than continuous gas flow measurement like the former case.

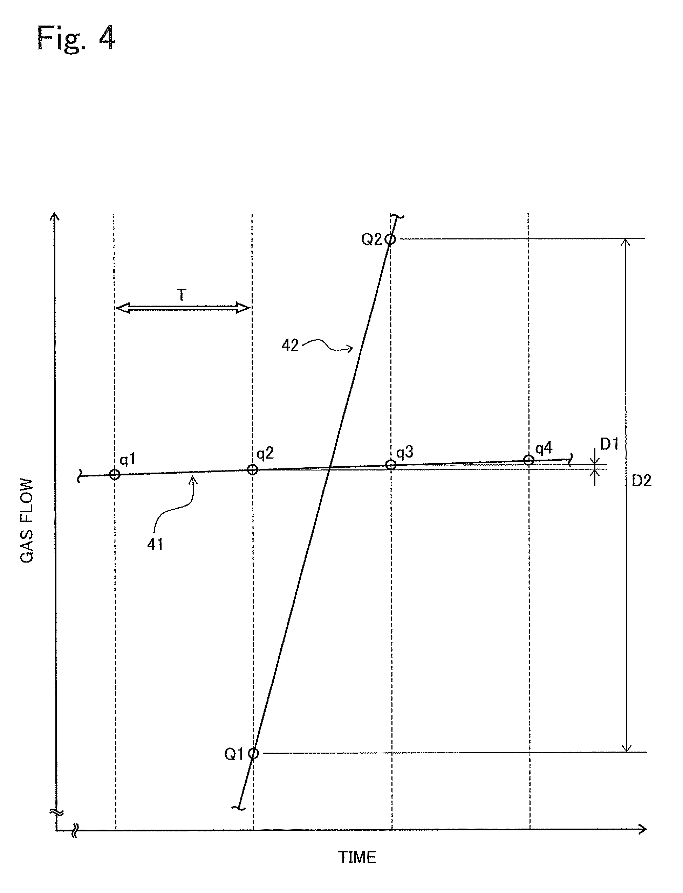

Therefore, in the flow meter device 10A of the present embodiment, the flow measuring section 11 is preferably configured to measure the gas flow at constant measurement time intervals. Hence, the flow pattern generated in the gas instrument determiner section 12 is preferably set data of changes of instantaneous gas flows measured at the measurement time intervals, which changes occur over time. This will be described with reference to Fig. 4.

When the flow measuring section 11 is configured to measure the gas flow at measurement time intervals T, as partially shown in Fig. 4, a flow pattern 41 of the fuel cell 21 and a flow pattern 42 of the general gas instrument 20 are each generated as set data F of continuous instantaneous flows. In Fig. 4, for easier explanation, the flow pattern 41 and flow pattern 42 are merely portions of the flow patterns. The flow pattern 41 which changes gradually is instantaneous flows (q1 ∼ q4) at 4 points which change continuously, while the flow pattern 42 which changes rapidly is instantaneous flows (Q1, Q2) at 2 points which change continuously.

The flow pattern may be formed as set data of continuous instantaneous flows. Nonetheless, to improve accuracy of the determination performed by the gas instrument determiner section 12, the flow pattern may contain a difference value between two continuous instantaneous flows. In the example shown in Fig. 4, regarding the flow pattern 41, a difference value D1 between two instantaneous flows F which are second and third instantaneous flows, among the four instantaneous flows F, is represented, while regarding the flow pattern 42, a difference value D2 between two instantaneous flows F is represented. This difference value may be calculated from two continuous instantaneous flows or from two instantaneous flows measured at times which are apart by a time interval exceeding the measurement time interval T. This difference value calculated from two continuous instantaneous flows may be (q2 - q1) or (q3 - q2) in Fig. 4. The difference value calculated from two instantaneous flows measured at times which are apart by a time interval exceeding the measuring internal T may be (q3 - q1) or (q4 - q2) in Fig. 4.

Although in the present embodiment, the gas instrument determiner section 12 is configured to generate actual measurement data (actual measurement flow pattern) of the flow pattern, the present invention is not limited to this. An actual measurement flow pattern generating section may be provided separately from the gas instrument determiner section 12, or the flow measuring section 11 may be configured to generate the actual measurement flow pattern. In either case, the flow meter device 10A may be configured to compare the actual measurement flow pattern generated from the gas flow measured by the flow measuring section 11 to the set patterns stored in the flow pattern storage section 13, to be able to determine the kind of the gas instrument 20.

### (Embodiment 2)

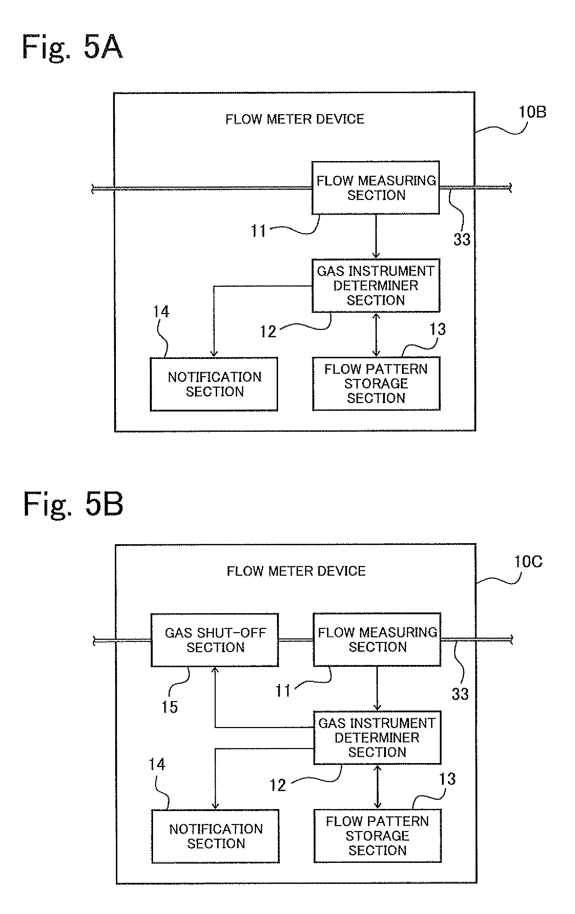

Although in Embodiment 1, the flow meter device 10A includes only the components for determining the kind of the gas instrument 20 in use, the present invention is not limited to this. A flow meter device according to Embodiment 2 may have a function for addressing gas leakage. This will be specifically described with reference to Fig. 5A and 5B.

As shown in Fig. 5A, a flow meter device 10B according to the present embodiment may be include a notification section 14. This notification section 14 emits an alarm in response to a command from the gas instrument determiner section 12. A configuration of the notification section 14 is not particularly limited. For example, the notification section 14 may emit the alarm in the form of a sound, or emit light along with the sound.

As shown in Fig. 5B, a flow meter device 10C according to the present embodiment may include a gas shut-off section 15 in addition to the notification section 14. The gas shut-off section 15 shuts-off the gas flowing in the gas supply line 32 when it is determined that there is an abnormal state or a fear of the abnormal state based on the gas flow measured by the flow measuring section 11. The gas shut-off section 15 is controlled by a control section (not shown in Fig. 5B) in the flow meter device 10C.

The control section (not shown) determines whether or not the gas flow measured by the flow measuring section 11 falls within a preset range of a shut-off reference flow. In addition, the control section causes the gas shut-off section 15 to operate to shut-off the gas flowing in the fluid passage 33 when the gas continues to fall within the preset range of the shut-off reference flow for a time period longer than a predetermined time.

To this end, in the flow meter device 10C according to the present embodiment, initially, the actual measurement flow pattern is generated from the gas flow measured by the flow measuring section 11, and the gas instrument determiner section 12 compares the actual measurement flow pattern to the set patterns. If the gas instrument determiner section 12 determines that the gas instrument 20 in use is the fuel cell 21, the gas flowing in the fluid passage 33 is not shut-off. In this case, the gas instrument determiner section 12 may not output a command for shutting-off the gas to the gas shut-off section 15, or may output a signal indicating that the fuel cell 21 is in use to the gas shut-off section 15 or to the control section (not shown), and a result, the gas flowing in the fluid passage 33 may not be shut-off. If it is determined that the gas is leaking, the gas instrument determiner section 12 causes the gas shut-off section 15 to operate to shut-off the gas flowing in the gas supply line 32 and causes the notification section 14 to emit an alarm.

Thus, in the present embodiment, the flow meter device 10B or 10C includes a known function for addressing gas leakage. The function for addressing gas leakage is not limited to the notification section 14, the gas shut-off section 15, etc., and may be another known components. Of course, the flow meter device 10B or 10C may include a function other than the function for addressing gas leakage.

In addition, many improvements and other embodiments of the present invention are apparent for those having ordinary skills in the art based on the above-described descriptions. Therefore, the above-described description should be construed as illustrations only, and to be presented for the purpose of teaching the best mode for conducting the present invention by a person having ordinary skills in the art. Therefore, details of the structures and/or functions may be substantially modified without departing from the spirit and scope of the present invention.

The present invention is not limited to the embodiments, and can be changed in various ways within a scope recited in claims, and embodiments derived by suitably combining technical means disclosed in different embodiments or plural modified examples are included in a technical scope of the present invention.

### Industrial Applicability

The present invention is widely suitably used in fields of a flow meter device having a function for determining a gas instrument in use as well as measurement of a gas flow. Particularly, the present invention can be suitably used in an environment including a fuel cell as a gas instrument.

### Reference Signs List

- 10A: flow meter device
- 10B: flow meter device
- 10C: flow meter device
- 11: flow measuring section
- 12: gas instrument determiner section
- 13: flow pattern storage section
- 15: gas shut-off section
- 20: gas instrument
- 21: fuel cell (gas instrument)
- 22: fan heater (gas instrument)
- 23: gas table (gas instrument)
- 33: fluid passage
- D1: difference value
- D2: difference value
- F: instantaneous flow
- P: flow change pattern
- T: measurement time interval

## Claims

1. A flow meter device for measuring flows of a gas flowing into a plurality of gas instruments including a fuel cell, comprising:
a fluid passage in which the gas flows;
a flow measuring section for measuring a gas flow in the fluid passage;
a flow pattern storage section for storing flow patterns which are patterns of the gas flow which change over time, for respective kinds of the plurality of gas instruments; and
a gas instrument determiner section which compares an actual measurement flow pattern generated from the gas flow measured by the flow measuring section to the flow patterns stored in the flow pattern storage section, to determine a kind of the gas instrument in use;
wherein the flow pattern storage section contains a flow pattern of at least the fuel cell of the plurality of gas instruments, and the flow pattern of the fuel cell includes an artificial flow pattern different from an original flow pattern of the fuel cell.

2. The flow meter device according to claim 1,
wherein the artificial flow pattern is a flow change pattern which is an increase/decrease in the gas flow within a predetermined time; and
wherein the increase/decrease in the gas flow of the flow change pattern is within a predetermined flow zone.

3. The flow meter device according to claim 2,
wherein the flow change pattern is set to be generated repetitively, and the actual measurement flow pattern including the flow change pattern is generated intermittently; and
wherein the gas instrument determiner section compares the actual measurement flow pattern to the flow patterns stored in the flow pattern storage section.

4. The flow meter device according to claim 3,
wherein the flow change pattern is set to be generated periodically, and the actual measurement flow pattern including the flow change pattern is generated periodically; and
wherein the gas instrument determiner section compares the actual measurement flow pattern to the flow patterns stored in the flow pattern storage section.

5. The flow meter device according to any one of claims 1 to 4,
wherein the flow measuring section measures an instantaneous flow intermittently at constant measurement time intervals;
wherein the actual measurement flow pattern includes a flow difference value calculated from two continuous instantaneous flows measured by the flow measuring section; and
wherein the gas instrument determiner section compares the actual measurement flow pattern including the flow difference value to the flow patterns stored in the flow pattern storage section.

6. The flow meter device according to any one of claims 1 to 4,
wherein the flow measuring section measures an instantaneous flow intermittently at constant measurement time intervals;
wherein the actual measurement flow pattern includes a flow difference value calculated from instantaneous flows measured by the flow measuring section at times which are apart by a time interval which is an integral multiple of the constant measurement time interval; and
wherein the gas instrument determiner section compares the actual measurement flow pattern including the flow difference value to the flow patterns stored in the flow pattern storage section.

7. The flow meter device according to any one of claims 1 to 4, further comprising:
a gas shut-off section for shutting-off the gas flowing into the gas instrument when the gas flow measured by the flow measuring section continues to fall within a preset range of a shut-off reference flow for a time period longer than a predetermined time; wherein
when the gas instrument determiner section determines that the gas instrument in use is the fuel cell, the gas shut-off section does not shut-off the gas flowing into the fuel cell even when the gas flow measured by the flow measuring section continues to fall within the preset range of the shut-off reference flow for the time period longer than the predetermined time.
